# EUROPEAN PATENT SPECIFICATION

(11) **EP 3 838 538 B1**
(45) Date of publication and mention of the grant of the patent: **07.08.2024**
(21) Application number: 19383156.7
(22) Date of filing: 19.12.2019
(51) Int. Cl.: B29B 17/02, B29B 17/04, B07B 4/00, B29B 17/00, B07B 4/02, B29K 105/08, B29K 105/24

(54) **METHOD OF RECYCLING CARBON FIBER PREPREG**
VERFAHREN ZUM RECYCLING VON KOHLENSTOFFFASERPREPREG
PROCÉDÉ DE RECYCLAGE DE PRÉ-IMPRÉGNÉ EN FIBRE DE CARBONE

(43) Date of publication of application: 23.06.2021
(73) Proprietor: Fundación Gaiker, 48170 Zamudio (ES)
(72) Inventor: Gondra, Koldo, 48170 Zamudio (ES); Allue, Alexandra, 48170 Zamudio (ES); Gómez, Jose Luis, 48170 Zamudio (ES); Alonso, Juan Ramón, 48170 Zamudio (ES)
(74) Representative: Balder IP Law, S.L.

(56) References cited:
- US-A- 5 297 741
- US-A- 5 647 544
- PANNKOKE K ET AL: "Efficient prepreg recycling at low temperatures", CRYOGENICS, ELSEVIER, KIDLINGTON, GB, vol. 38, no. 1, 1 January 1998 (1998-01-01), pages 155 - 159, XP004118980, ISSN: 0011-2275, DOI: 10.1016/S0011-2275(97)00127-6

## Description

### TECHNICAL FIELD

The present invention relates to a method for recycling carbon fiber prepreg, recycled materials obtained and the preparation of moulded parts from the recycled materials.

### STATE OF THE ART

Carbon fiber reinforced polymeric materials are used in a variety of components and products chiefly in the aeronautical, automobile, and railway industry, in wind-turbine and sporting goods manufacture and in civil engineering.

Approximately a 20% of carbon-fiber prepreg used in these industries ends-up as dangerous waste, which has significant economical and environmental cost associated to its processing. For instance, if the cost of virgin carbon-fiber prepreg is of 40-90 €/kg the costs of the treatment of such prepreg as dangerous residues is of about 1 €/kg. There is, therefore, an economical and environmental interest in reducing the amount of carbon-fiber prepreg waste.

Recycling of carbon-fiber reinforced polymers has attracted attention in the last decades. Many different recycling techniques have been studied in the last two decades: mechanical processes (mainly grinding), pyrolysis and other thermal processes, and solvolysis. For instance, US Patent number 5,647,544 describes a method and apparatus for the single type recovery of plastic materials from starting pieces of a multiple composite material wherein the starting pieces are firstly comminuted producing a mixture of film clippings and free prepreg pieces which is subjected to a wet, density-selective flotation-like float and sink separation, the films floating and the free prepreg pieces sinking.

Some of these techniques, particularly pyrolysis, have even reached an industrial scale and are exploited commercially. Pyrolysis is the most widespread of the known recycling technologies as it involves a process which is heavily used in the chemical industry. Nonetheless, it has the drawback that the fibers in the prepreg degrade at high temperatures. Consequently, solvolytic processes have attracted increasing interest, especially over the last decade. In particular, supercritical fluids have received much attention because of their properties can be tuned depending on operating conditions (e.g. temperature, pressure and volume). However, the equipment required to execute such processes can be very expensive due to the harshness of the process conditions. Recent investigations have considered milder conditions, but these come with a cost on process time. Furthermore, in such milder solvolytic processes solvents and/or catalysts are used that can be toxic and difficult to separate and dispose of. The fibers in the prepreg can also be damaged by the use of such catalysts.

Accordingly, there is a need for the recovery of carbon fibers from carbon fiber prepreg waste materials which does not adversely affect other environmental aspects such as energy consumption, generation of chemical waste and emissions and which at the same time is commercially viable.

On the other hand, carbon fibers reclaimed from carbon fiber prepreg of high-technology applications cannot be reincorporated in the same applications from which they were recovered. Accordingly, some efforts have been focused on the finding of new appropriate applications for the use of recycled fibers from prepreg waste. For instance, international Patent application WO 13076601 A1 describes an insulating panel, comprising particles of shredded and/or granulated waste material at least in part formed by any of the following constituents: fiberglass, glass fiber reinforced plastic and carbon fibers, wherein the particles are bonded together by an adhesive as a coherent mat having a self-supporting porous structure.

An alternative method to recycle CFRP prepregs is presented in the paper PANNKOKE K ET AL: "Efficient prepreg recycling at low temperatures",CRYOGENICS, ELSEVIER, KIDLINGTON, GB, vol. 38, no. 1, 1 January 1998 (1998-01-01), pages 155-159, XP004118980,ISSN: 0011-2275, DOI: 10.1016/30011-2275(97)00127-6 or in the application US 5 297 741 A.

### SUMMARY OF THE INVENTION

The instant application relates to an improved method of recycling carbon fiber prepreg according to claim 1, said method comprising the steps of
i) comminuting a carbon fiber prepreg waste material comprising a laminate of carbon fiber embedded in a non-cured thermosetting resin and a protective polymeric film, to provide a comminuted carbon fiber prepreg waste material comprising a mixture of resin embedded carbon fiber particles (A), and polymeric film fragments (B), wherein A particles are of higher density than B fragments;
ii) separating A particles from B fragments in a density separator, by subjecting a flow of the mixture of A particles and B fragments to an airflow of opposite direction, and collecting A particles in a collector A and collecting B fragments in a separate collector B, and wherein the collected A particles are substantially free from B fragments; and
iii) adding 5-35 wt.% of virgin non-cured thermosetting resin to the collected A particles, the wt.% being based on the total amount of collected A particles and virgin non-cured thermosetting resin, to provide a recycled non-cured carbon fiber material comprising the collected A particles and virgin non-cured thermosetting resin.

By comminuting the carbon fiber prepreg comprising the protective film, a method as described herein simplifies starting material preparation for recycling and at the same time facilitates de comminuting step of non-cured carbon fiber prepregs. Furthermore, by separating the carbon fiber prepreg containing particles from polymeric film fragments in a density separator as described herein, a product substantially free of polymeric film can be achieved. These and other advantages of a method as described herein will become apparent in the subsequent detailed description of the invention.

The instant invention further discloses a device for carrying out a method as described herein, namely for recycling carbon fiber prepreg, said device comprising
i) a dosing system to fed carbon fiber prepreg waste material through a loading hopper, into
ii) a comminuting chamber where carbon fiber prepreg is cut by a rotor with refrigerated iron blades (with pressurized water circulation) to provide a comminuted carbon fiber prepreg waste material comprising a mixture of resin embedded carbon fibers particles (A) and polymeric film fragments (B). It is very important that this area of the equipment is properly refrigerated, since otherwise, the heat generated by the process can make shredding cuts difficult.
iii) a perforated mesh located under the rotor to allow the comminuted particles to flow into a discharge area. The diameter of the mesh perforations determines the final particle size of the material.
iv) a density separator comprising a feed hopper vibrating dispenser for feeding the comminuted particles (carbon fiber particles A and polymeric fragments B) to a separation chamber with an opposite airflow source, such that the carbon fibers particles A are collected in a first collector A and the film fragments B are collected in a second collector B, and wherein the collected particles A are substantially free from film fragments B
v) an addition station for adding 5-35 wt.% of virgin non-cured thermosetting resin to the collected carbon fiber particles A.

The addition station can comprise a mixing station (double blade kneader with z blade) for mixing the collected carbon fiber particles A with the virgin non-cured thermosetting resin to manufacture, e.g., a bulk molding compound (BMC) formulation of recycled non-cured carbon fiber material comprising the collected A particles and virgin non-cured thermosetting resin.

The addition station can comprise a shaping station to provide the recycled non-cured carbon fiber material comprising the collected A particles and virgin non-cured thermosetting resin in the form of a sheet, as explained in detail below. A recycled non-cured carbon fiber material in the form of a sheet can be used in an SMC molding process.

The disclosed device can optionally further comprise a molding station (hot compression molding) for molding the recycled non-cured carbon fiber material.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

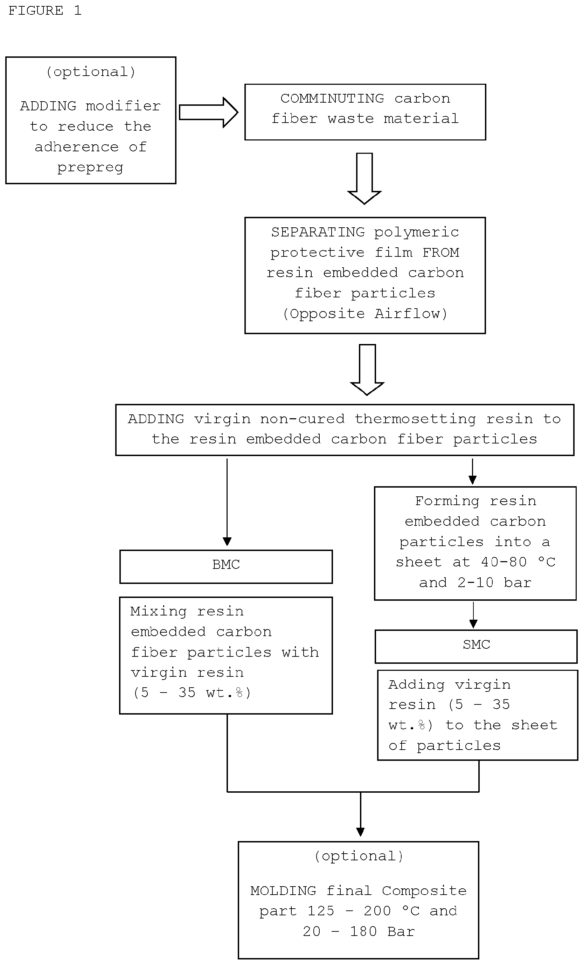

FIGURE 1 shows schematically the main steps of a method of the invention for the preparation of recycled BMC and SMC products.

### DETAILED DESCRIPTION OF THE INVENTION

A method of recycling carbon fiber prepreg as described herein comprises the step of comminuting a carbon fiber prepreg waste material comprising a laminate of carbon fiber embedded in a non-cured thermosetting resin material and a protective polymeric film (step i)).

The starting carbon fiber prepreg waste material may be any waste material from a suitable industry such as the aeronautical, automobile, and railway industry, wind-turbine manufacturing, from civil engineering and sports goods. Typically such industries use laminates, also known as SMCs (Sheet Molding Compounds), of carbon fiber embedded in a non-cured thermosetting resin material and a protective polymeric film to obtain cured molded parts. In the process of cutting such laminates left overs of carbon fiber prepreg waste material (e.g. cuttings, clippings, trimmings and shavings are generated which can be recycled in a process as described herein.

The starting carbon fiber prepreg waste material may typically comprise carbon fiber embedded in a non-cured thermosetting resin material such as an epoxy resin, a vinyl ester (VE) resin or mixtures thereof. Carbon fiber prepreg waste material may comprise a mixture of waste materials, e.g. of different origin, having the same or different non-cured thermosetting resin material. A starting carbon fiber prepreg waste material for a method as described herein may preferably be of the same non-cured thermosetting resin material, e.g., an epoxy resin or a vinyl ester resin.

A method as described herein advantageously allows for the integrity of the fibers in the starting carbon fiber prepreg waste material to be substantially maintained, thereby allowing the use of recycled materials in applications wherein the length of the fibers is of importance, e.g. to maintain the strength of the reinforcement.

The starting carbon fiber prepreg waste material may typically comprise a protective polymeric film selected from a polyethylene film, polypropylene film, polyamide film and polyester film. In a process as described herein advantageously such polymeric film does not need to be separated from the carbon fiber embedded in a non-cured thermosetting resin prior to comminuting. Furthermore, the inventors have found that the presence of such film is advantageous during the comminuting step as the film appears to contribute to facilitating the comminuting, in particular preventing the non-cured thermosetting resin of the waste material from adhering to the tools used for comminuting, e.g. comminuting blades and/or chamber.

Comminuting may comprise cutting and/or shredding the carbon fiber prepreg waste material.

Comminuting may be typically performed using a comminuting apparatus also referred to herein as a comminuting station or a comminutor. A comminutor used in a method as described herein comprises, e.g., a blade and a comminuting chamber. Such comminutor may further comprise other elements such as a mesh screen, a cooling system, a dosing system, and suction system.

In several embodiments comminuting can be performed using refrigerated comminuting elements, e.g. a refrigerated blade and/or a refrigerated comminuting chamber. Using such refrigerated comminuting elements may contribute to facilitating the comminuting, in particular further preventing the non-cured thermosetting resin of the waste material from adhering to the comminuting elements. If such refrigerated comminuting elements are used a condensation system can be incorporated to the comminutor to prevent water from condensing onto the (comminuted) carbon-fiber prepreg waste material.

Comminutors and communiting elements, including refrigerated comminuting elements, are comercially available. For instance a commercial comminutors may be, e.g., Granulatore 50-30/XT+HS-30/SV, of TRIA supplied by Equiper

Suitable blades are commercially available and may preferably be an abrasion resistant blade such as tempered steel blades suplied by, e.g., Equiper. Refrigerated brades may be available commercially or may be designed by a person skileld in the art, e.g. according to figure 3.

Comminuting of step i) provides a comminuted carbon fiber prepreg waste material comprising a mixture of resin embedded carbon fiber particles (A) and polymeric film fragments (B), wherein A particles are of higher density than B fragments. A particles may typically have a density of ρ_{A} = 0.910 - 0.940 g/cm³. and B fragments may typically have a density of ρ_{B} = 1.4-1.6 g/cm³. The ratio of the density of the A particles over the density of the B particles may typically be of ρ_{A}/ρ_{B} = 1.75-1.5.

The resin embedded carbon fiber particles (A) and polymeric film fragments (B) may be adhered to each other or may be loose in the mixture. A modifier may be added to the carbon fiber prepreg prior to, during and/or after the comminuting step i). Adding such modifier has been found to advantageously improve the comminuting of step i) and/or the separating of step ii). In particular, the presence of a modifier has been found to reduce the adherence of the non-cured thermosetting material further preventing the non-cured thermosetting resin of the waste material from adhering to, e.g., the comminuting elements and/or the polymeric film, thereby also improving the subsequent separation of the resin embedded carbon fiber particles (A) and polymeric film fragments (B). A modifier may be selected from, e.g., hydrated magnesium silicate, calcium carbonate and aluminum silicates and may preferably be hydrated magnesium silicate.

A modifier as described herein may be added in an amount of 1-7 wt.%, of 1-5 wt.% or of about 4 wt.%, based on the total amount of carbon fiber prepreg waste material.

In several embodiments comminuting can be performed in a comminuting chamber provided with a mesh screen. A mesh may be used to ensures that the comminuted carbon fiber prepreg waste material comprising particles and/or fragments of a desired size. In particular, a mesh screen as described herein may have a mesh diameter of 10-50 mm, in particular of 15-45 mm, more in particular of 20-40 mm. Such mesh screens may be suitably used provide A particles and/or B fragments of less than 50 mm, in particular, less than 45 mm and in particular less than 40 mm, less than 20 mm, less than 15 mm or even less than 10 mm. A particles having an average particle size of 10-40 mm or 10-30 mm may be preferred. Such average particle sizes have been found to be optimal to reach the desired mechanical performance for the final prepreg product obtained from A particles. The average particle size may be determined by particle size measurement, of representative samples, with a gauge.

Small average particle sizes (e.g. average particle sizes of less than 10 mm) have been found to adversely contain short the carbon fibers, that reduce the mechanical performance of the final prepreg products obtained therefrom. On the other hand, bigger average particle sizes (e.g. of more than 50 mm) have been found to difficult mixing the particles with the virgin resin.

A method as described herein comprises separating A particles from B fragments in a density separator, by subjecting a flow of the mixture of A particles and B fragments to an airflow of opposite direction, and collecting A particles in a collector A and collecting B fragments in a separate collector B, and wherein the collected A particles are substantially free from B fragments (step ii)).

In several embodiments after the comminuting step i) the mixture of resin embedded carbon fiber particles (A) and polymeric film fragments (B) is transported by suction to the density separator. Such suction may advantageously favor loosening the mixture of A particles and B fragments and thereby improve the separation thereof.

Separation may be performed discontinuously (on batch mode) or continuously.

A density separator may typically comprise a separation chamber, an opposite airflow source and a collection system comprising
- a first collector A for carbon fiber particles, preferably a chilled hopper, that may act as a vacuum cleaner and that has a certain inclination, and that inside it may preferably have a vibrating piece to distribute the carbon particles homogeneously which will deposit the carbon particles on conveyor belts to take them to a next stage of the process and
- a second collector B for film fragments, which have been separated with opposite air flow circulation.

The airflow of opposite direction may preferably be from 70 to 120 m³/h, in particular 80-110 m³/h, more in particular 90-105 m³/h.

The density separator may preferably operate vertically. A density separator may further comprise other elements such as a dosing system (e.g. a feed hopper vibrating dispenser for feeding the comminuted particles) and a suction system.

The density separator may also comprise a regulatory valve which regulates the pressure in the separation chamber. In a discontinuous separation such valve may be used to maintain the separation chamber closed, e.g. when separation is taking place under airflow, and to open the separation chamber, for addition of a new batch of comminuted carbon fiber prepreg waste material and/or for removal of separated A particles and/or B fragments. Such regulatory valve may be operated at a pressure difference of 60-100 Pa, in particular 75-90 Pa.

It has been found that combining comminuting the carbon fiber prepreg waste comprising the protective polymeric film with a separating the mixture of resin embedded carbon fiber particles (A) and polymeric film fragments (B) in a density separator as described herein, advantageously results in collected A particles substantially free from B fragments. For instance, the collected A particles typically comprise at most 5 wt.% of polymeric film material with respect to the total weight of the collected A particles (including the weight of the polymeric film material), in particular at most 3 wt.%, more in particular at most 1.5 wt.%, more in particular at most 1 wt.% and even more in particular at most 0.5 wt.%.

A method as described herein further comprises adding 5-35 wt.% of virgin non-cured thermosetting resin to the collected A particles, the wt.% being based on the total amount of collected A particles and virgin non-cured thermosetting resin, to provide a recycled non-cured carbon fiber material comprising the collected A particles and virgin non-cured thermosetting resin (step iii)).

Virgin non-cured thermosetting resin as used herein refers to a thermosetting resin which has not been previously compounded and has not been cured.

Suitable virgin non-cured thermosetting resins are generally compatible with the non-cured thermosetting resin of the carbon fiber prepreg waste material processed according to a method as described herein. Compatible as used herein means that allows the polymerization of the thermosetting resin in the final molding step of the recycled material having both recycled and virgin resins.

Virgin non-cured thermosetting resin may be preferably selected from epoxy resin and vinyl ester resin.

In several embodiments the virgin non-cured thermosetting resin may be of the same type as the non-cured thermosetting resin of the carbon fiber prepreg waste material. In particular, the virgin resin may be, but it does not need to be, of the same chemical composition as the resin of the carbon fiber prepreg waste material. For instance, an epoxy resin may be added to separated resin embedded carbon fiber particles A obtained from an epoxy resin carbon fiber prepreg processed according to a method as described herein, although the virgin epoxy resin need not to be the same epoxy resin.

For instance, the virgin epoxy-resin may be bisphenol A epoxy resin (such as EPIKOTE Resin TRAC 06605/ EPIKURE Curing Agent TRAC 06608 from Hexion), an epoxy vinyl ester-resin (such as Derakane 766/ Derakane 8090 curing agent) or mixtures of thereof and the resin of the carbon fiber prepreg waste may be bisphenol A (BPA) epoxy resin.

The virgin non-cured thermosetting resin may further comprise a component selected from
- a curing agent (e.g. for an epoxy thermosetting resin such as EPIKOTE Resin TRAC 06605 the curing agent may be an anhydride such as EPIKURE Curing Agent TRAC 06608, with a mix ratio of, e.g., 100 (resin):23 (curing agent)),
- a curing catalyst (e.g. for a vinyl ester resin the curing catalyst may be a peroxide, such as Peroxan PO which may be used in an amount of, e.g., 1-2 phr),
- a release agent (e.g. selected from wax, polyvinyl alcohol, silicone, and Zn stearate, in particular HELOXY Additive TRAC 06805 may be used as mold release agent for, e.g., EPIKOTE Resin TRAC 06605 in an amount of, e.g., 2-4 phr), and
- a binder (e.g. silane such as Silguest^{™} A-1101 Silane, in an amount of, e.g., 0,5-1 phr)
- an accelerator (e.g. DMP-30 and/or BEPOX, in an amount of, e.g., 2-8 phr).

Such components may be present in a combined amount from 25.5 to 28 phr (parts per hundred of resin).

A curing agent and the catalyst typically are present to assist the curing of the thermosetting resin. The type of curing agent and the catalyst depend of the type of virgin resin used. For instance, anhydride will be typically used in combination with epoxy resin, peroxide may be typically used in combination with vinyl ester resin.

A mold release agent (such as wax, polyvinyl alcohol and silicone) may be typically used in recycled non-cured carbon fiber material that is subsequently subjected to molding to improve the release of the molded part from the mold. An internal release agent (such as Zn stearate) may be typically used to prevent the part from adhering to the mold during its forming.

A binder may be typically used for improving the fiber-matrix interface and with it the mechanical performance.

In several embodiments adding the virgin non-cured thermosetting resin to the collected A particles may be performed by mixing the collected A particles with the virgin non-cured thermosetting resin, to provide the recycled non-cured carbon fiber material comprising the collected A particles and virgin non-cured thermosetting resin (step a)). Mixing may be performed in a mixing station, such as a double-arm industrial mixer with high capacity, for example 100 liters. Such mixers may be commercially available (such as Mixing Station of 100 liters from Gruber Hermanos S.A.). Mixing may be performed in discontinuous or continuous mode. For instance, the collected A particles may be introduced to the mixer and subsequently virgin non-cured thermosetting resin may be introduced into the mixer.

The recycled non-cured carbon fiber material obtained from mixing may be used as such, e.g., in molding processes. For instance, the recycled non-cured carbon fiber material obtained from mixing may be directly used as bulk molding compound (BMC). BMCs are widely used in, e.g., the transport, electric, energy, and construction industries for the formation of molded parts, e.g., bumpers, hoods, automotive structural inserts, etc.

The recycled non-cured carbon fiber material obtained from mixing may also be subsequently shaped, e.g., into a sheet, before molding/curing. For instance, adding of step iii) may further comprise forming the recycled non-cured carbon fiber material provided in step a) into a sheet at a temperature of 40-80 °C and a pressure of 2-10 bar to provide the recycled non-cured carbon fiber material comprising the collected A particles and virgin non-cured thermosetting resin in the form of a sheet (step b)). Shaping may be performed in a shaping station comprising, e.g., a hot plate press (such as Hoesch MFD 300 Tons hot plate press).

Alternatively, in several embodiments, adding the virgin non-cured thermosetting resin to the collected A particles may be performed by
a) subjecting the collected A particles to a temperature of 40-80 °C and a pressure of 2-10 bar to obtain a sheet of collected A particles
b) adding the virgin non-cured thermosetting resin to the sheet of collected A particles,
to provide the recycled non-cured carbon fiber material comprising the collected A particles and virgin non-cured thermosetting resin in the form of a sheet.

Shaping the collected A particles into a sheet of collected A particles may be performed in a shaping station as described above.

Adding the virgin non-cured thermosetting resin to the sheet of collected A particles may be performed by, e.g., SMC (Sheet Molding Compound) Technology using a device commonly used in the industry for such applications, such as SMC or prepreg machinery (e.g. Schimdt & Heinzmann, Model 1993). For instance protective polymeric films may be provided with a layer of virgin thermosetting resin on the protective polymeric film. The sheet of collected A particles may then be sandwiched between two of said protective polymeric films layered with the virgin thermosetting resin, wherein the layer of resin is in direct contact with the sheet of collected A particles and the sandwiched assembly may be pressed, e.g., at room temperature and at 1-2 bar, to provide the recycled non-cured carbon fiber material comprising the collected A particles and virgin non-cured thermosetting resin in the form of a sheet between two protective polymeric films. The protective polymeric films used may be of a material as the protective polymeric film described above for the starting carbon fiber prepreg waste material.

A recycled non-cured carbon fiber material in the form of a sheet as described herein may be used as such, e.g., in molding processes. For instance, it may be directly used as SMC (Sheet Molding Compound). SMCs are widely used in, e.g., the transport, electric, energy, and construction industries for the formation of molded parts, e.g., automotive Class A body panels, high-strength electrical parts, business equipment cabinets, personal watercraft.

A method as described herein may further comprise molding the recycled non-cured carbon fiber material or the recycled non-cured carbon fiber material in the form of a sheet. Molding may typically involve hot compression. In particular molding may be performed at a temperature of 125-200 °C and a pressure of 20-180 bar.

Molding may be performed in a molding station as typically used in the art, e.g. molding apparatuses typically used in the relevant industry.

In particular since a recycled non-cured carbon fiber material obtained in a method as described herein typically maintains the length of the carbon fiber of the starting prepreg waste material, the recycled non-cured carbon fiber material may be used, e.g., as BMC or SMC in an industry with high demands such as automotive and transport industries. The recycled non-cured carbon fiber material obtained in a method as described herein may also be used in, e.g., civil engineering, wind-turbine manufacture, and sporting goods.

A recycled non-cured carbon fiber material obtained in a method as described herein also has good mechanical properties. In particular, molded parts obtained from a recycled non-cured carbon fiber material obtained in a method as described herein also have good mechanical properties and stability. For instance, recycled molded parts may have 175-400 MPa, in particular 200-325 MPa (e.g. about 228 MPa or about 315 MPa) of flexural resistance and 10-30 GPa, in particular 15-25 GPa (e.g. about 17 GPa or about 22 GPa) of flexural modulus (as determined by, e.g., UNE EN ISO 14125).

The instant invention further discloses a device for carrying out a method as described herein, namely for recycling carbon fiber prepreg, said device comprising
- a dosing system to fed carbon fiber prepreg waste material through a loading hopper, into
- a comminuting chamber where carbon fiber prepreg is cut by a rotor with refrigerated iron blades to provide a comminuted carbon fiber prepreg waste material comprising a mixture of resin embedded carbon fibers particles (A) and polymeric film fragments (B),
- a perforated mesh located under the rotor to allow the comminuted particles to flow into a discharge area,
- a density separator comprising a feed hopper vibrating dispenser for feeding the comminuted particles (carbon fiber particles A and polymeric fragments B) to a separation chamber with an opposite airflow source, such that the carbon fibers particles A are collected in a first collector A and the film fragments B are collected in a second collector B, and wherein the collected particles A are substantially free from film fragments B,
- an addition station for adding 5-35 wt.% of virgin non-cured thermosetting resin to the collected carbon fiber particles A.

The instant invention is further illustrated by the following examples, without being limited thereto or thereby.

### Example 1: Preparation of recycled BMC molded products

A carbon fibre prepreg waste material was processed and separated according to a method as described herein to provide resin embedded carbon fiber particles of 30 mm average particle size. The resin embedded carbon fiber particles had very high purity (100 wt.%) without traces of protective film.

BMC based on the separated particles of recycled carbon prepreg aglomerated with 15 wt% virgin epoxy resin formulation was prepared.

The particles were mixed with the virgin resin with an industrial mixer, for a mixing time of 10 minutes, with the aim of not degrading the fiber during the process.

The virgin epoxi resin formulation was the following:

| **Reactive** | **Type** | **Amount (phr)** |
|---|---|---|
| EPIKOTE TRAC 06605 | Resin | 100 |
| EPIKURE TRAC 06608 | Curing Agent | 23 |
| HELOXY Additive TRAC 06805 | Mold release agent | 4 |
| DMP-30 | Accelerator | 4 |
| BEPOX | Accelerator | 2 |

Then the BMC was molded in a hot plate press, with the following conditions: 180 °C of temperature, 80 bar of pressure and 10 minutes of cycle time.

Under these conditions the final composite had a performance of 314 MPa of flexural resistance and 22 GPa of flexural modulus (as determined according to UNE EN ISO 14125).

### Example 2: Preparation of recycled SMC molded products

A carbon fibre prepreg waste material was processed and separated according to a method as described herein to provide resin embedded carbon fiber particles of 10 mm average particle size. The resin embedded carbon fiber particles had high purity (98.5 wt.%) with few traces of polyethylene protective film (1.5 wt.%).

The particles were mixed with the virgin resin with an industrial mixer, for a mixing time of 10 minutes, with the aim of not degrading the fiber during the process.

The epoxi resin formulation was the following:

| **Reactive** | **Type** | **Amount (phr)** |
|---|---|---|
| EPIKOTE TRAC 06605 | Resin | 100 |
| EPIKURE TRAC 06608 | Curing Agent | 23 |
| HELOXY Additive TRAC 06805 | Mold release agent | 4 |
| DMP-30 | Accelerator | 4 |
| BEPOX | Accelerator | 2 |

The carbon fiber particles mixed with the virgin resin were formed into a sheet in a continuous laminator, at a temperature of 60 °C and a pressure of 3 Bar.

Then the SMC was molded in a hot plate press, with the following conditions: 180 °C of temperature, 80 bar of pressure and 10 minutes of cycle time.

Under these conditions the final composite had a performance of 228 MPa of flexural resistance and 17 GPa of flexural modulus (determined by UNE EN ISO 14125).

## Claims

1. A method of recycling carbon fiber prepreg the method comprising the steps of
i) comminuting a carbon fiber prepreg waste material comprising a laminate of carbon fiber embedded in a non-cured thermosetting resin and a protective polymeric film, to provide a comminuted carbon fiber prepreg waste material comprising a mixture of
resin embedded carbon fiber particles (A), and
polymeric film fragments (B),
wherein A particles are of higher density than B fragments;
ii) separating A particles from B fragments in a density separator, and collecting A particles in a collector A and collecting B fragments in a separate collector B, and wherein the collected A particles are substantially free from B fragments, said method being **characterized in that** said A particles are separated from said B fragments in said density separator, by subjecting a flow of the mixture of A particles and B fragments to an airflow of opposite direction; and **in that** said method further comprises the step of
iii) adding 5-35 wt.% of virgin non-cured thermosetting resin to the collected A particles, the wt.% being based on the total amount of collected A particles and virgin non-cured thermosetting resin, to provide a recycled non-cured carbon fiber material comprising the collected A particles and virgin non-cured thermosetting resin.

2. The method of claim 1, wherein adding of step iii) is performed by
a) mixing the collected A particles with the virgin non-cured thermosetting resin, to provide the recycled non-cured carbon fiber material comprising the collected A particles and virgin non-cured thermosetting resin.

3. The method of claim 2, wherein adding of step iii) further comprises
b) forming the recycled non-cured carbon fiber material provided in step a)
into a sheet at a temperature of 40-80 °C and a pressure of 2-10 bar to provide the recycled non-cured carbon fiber material comprising the collected A particles and virgin non-cured thermosetting resin in the form of a sheet.

4. The method of claim 1, wherein adding of step iii) is performed by
a) subjecting the collected A particles to a temperature of 40-80 °C and a pressure of 2-10 bar to obtain a sheet of collected A particles
b) adding the virgin non-cured thermosetting resin to the sheet of collected A particles,
to provide the recycled non-cured carbon fiber material comprising the collected A particles and virgin non-cured thermosetting resin in the form of a sheet.

5. The method of any one of claims 1-4 further comprising
iv) molding the recycled non-cured carbon fiber material of claim 1 or 2 or the recycled non-cured carbon fiber material in the form of a sheet of claim 3 or 4 at a temperature of 125-200 °C and a pressure of 20-180 bar.

6. The method of any one of claims 1-5 wherein comminuting of step i) comprises
a) cutting and/or shredding the carbon fiber prepreg waste material and/or
b) using a refrigerated blade and/or a refrigerated comminuting chamber.

7. The method of any one of claims 1-6 wherein the virgin non-cured thermosetting resin comprises thermosetting polymer selected from an epoxy resin (e.g. bisphenol A epoxy resin) and a vinyl-ester (VE) resin.

8. The method of any one of claims 1-7 wherein the virgin non-cured thermosetting resin comprises a component selected from a curing agent (e.g. an anhydride), a curing catalyst (e.g. a peroxide), a mold release agent (e.g. selected from wax, polyvinyl alcohol and silicone), an internal release agent (e.g. Zn stearate), and a binder (e.g. silane).

9. The method of any one of claims 1-8 comprising adding a modifier, to the carbon fiber prepreg waste material prior to, during and/or after step i) in order to improve the comminuting of step i) and/or the separating of step ii), wherein optionally
a) the modifier is added in an amount of 1-7 wt.%, of 1-5 wt.% or of about 4 wt.%, based on the total amount of carbon fiber prepreg waste material and/or
b) the modifier is selected from hydrated magnesium silicate, calcium carbonate and aluminum silicates.

10. The method of any one of claims 1-9 wherein the carbon fiber prepreg waste material comprises
a) thermosetting resin material selected from an epoxy resin (e.g. bisphenol A epoxy resin) and a vinyl-ester (VE) resin, and/or
b) a protective polymeric film selected from a polyethylene film, polypropylene film, polyamide film and polyester film.

11. The method of any one of claims 1-10 wherein in the separating step ii) the airflow of opposite direction is from 70 to 120 m³/h, in particular 80-110 m³/h, more in particular 90-105 m³/h.

12. The method of any one of claims 1-11 wherein the comminuting step i) is performed in a comminuting chamber provided with a mesh screen having a mesh diameter of 5-50 mm, in particular of 10-45 mm, more in particular of 25-40 mm.

13. The method of any one of claims 1-12 wherein after the comminuting step i) the mixture of resin embedded carbon fiber particles (A) and polymeric film fragments (B) is transported by suction to the density separator.

## Patentansprüche

1. Ein Verfahren zum Recycling von Kohlenstofffaser-Prepreg, wobei das Verfahren folgende Schritte umfasst
i) Zerkleinerung eines Kohlenstofffaser-Prepreg-Abfallmaterials umfassend ein Laminat aus Kohlenstofffasern, die eingebettet sind in ein nicht ausgehärtetes wärmehärtendes Harz und eine Polymerschutzfolie, um ein zerkleinertes Kohlenstofffaser-Prepreg-Abfallmaterial bereitzustellen, das eine Mischung aus
in Harz eingebettete Kohlenstofffaserteilchen (A) und
Polymerfolienfragmente (B) umfasst,
wobei A-Partikel eine höhere Dichte aufweisen als B-Fragmente;
ii) Trennen von A-Teilchen von B-Fragmenten in einem Dichteseparator und Sammeln von A-Teilchen in einem Kollektor A und Sammeln von B-Fragmenten in einem separaten Kollektor B, und wobei die gesammelten A-Teilchen im Wesentlichen frei von B-Fragmenten sind, wobei das Verfahren **dadurch gekennzeichnet ist, dass** die A-Teilchen von den B-Fragmenten in dem Dichteseparator getrennt werden, indem ein Strom des Gemisches aus A-Teilchen und B-Fragmenten einem Luftstrom mit entgegengesetzter Richtung ausgesetzt wird; und dadurch, dass das Verfahren ferner den Schritt umfasst
iii) Zugabe von 5-35 Gew.-% unbehandeltes, nicht-ausgehärtetes wärmehärtendes Harz zu den gesammelten A-Teilchen, wobei sich die Gew.-% auf die Gesamtmenge der gesammelten A-Teilchen und des unbehandelten, nicht ausgehärteten wärmehärtenden Harzes beziehen, um ein recyceltes, nicht ausgehärtetes Kohlenstofffasermaterial zur Verfügung zu stellen, das die gesammelten A-Teilchen und unbehandeltes, nicht-ausgehärtetes wärmehärtendes Harz umfasst.

2. Das Verfahren gemäß Anspruch 1, wobei die Zugabe in Schritt iii) durchgeführt wird durch
a) Mischen der gesammelten A-Teilchen mit dem unbehandelten, nicht ausgehärteten wärmehärtenden Harz, um das recycelte, nicht ausgehärtete Kohlenstofffasermaterial zu erhalten, das die gesammelten A-Teilchen und unbehandeltes, nicht ausgehärtetes wärmehärtendes Harz umfasst.

3. Das Verfahren gemäß Anspruch 2, wobei die Zugabe in Schritt iii) weiterhin umfasst
b) Formen des in Schritt a) bereitgestellten recycelten, nicht ausgehärteten Kohlenstofffasermaterials bei einer Temperatur von 40-80 °C und einem Druck von 2-10 bar zu einer Folie, um das recycelte, nicht ausgehärtete Kohlenstofffasermaterial zur Verfügung zu stellen, das die gesammelten A-Teilchen und unbehandeltes, nicht ausgehärtetes wärmehärtendes Harz in Form einer Folie umfasst.

4. Das Verfahren gemäß Anspruch 1, wobei die Zugabe in Schritt iii) durchgeführt wird durch
a) Aussetzen der gesammelten A-Teilchen einer Temperatur von 40-80 °C und einem Druck von 2-10 bar, um eine Folie aus gesammelten A-Teilchen zu erhalten
b) Zugabe des unbehandelten, nicht ausgehärteten wärmehärtenden Harzes zu der Folie aus gesammelten A-Teilchen,
um das recycelte, nicht ausgehärtete Kohlenstofffasermaterial zur Verfügung zu stellen, das die gesammelten A-Teilchen und das unbehandelte, nicht ausgehärtete wärmehärtende Harz in Form einer Folie umfasst.

5. Das Verfahren gemäß einem der Ansprüche 1-4, das weiterhin umfasst
iv) Formen des recycelten, nicht ausgehärteten Kohlenstofffasermaterials gemäß Anspruch 1 oder 2 oder des recycelten, nicht ausgehärteten Kohlenstofffasermaterials in Form einer Folie gemäß Anspruch 3 oder 4 bei einer Temperatur von 125-200 °C und einem Druck von 20-180 bar.

6. Das Verfahren gemäß einem der Ansprüche 1-5, wobei die Zerkleinerung in Schritt i) umfasst
a) Schneiden und/oder Zerreißen des Kohlenstofffaser-Prepreg-Abfallmaterials und/oder
b) unter Verwendung eines gekühlten Messers und/oder einer gekühlten Zerkleinerungskammer.

7. Das Verfahren gemäß einem der Ansprüche 1-6, wobei das unbehandelte, nicht ausgehärtete wärmehärtende Harz ein wärmehärtendes Polymer umfasst, das ausgewählt wird aus Epoxidharz (beispielsweise Bisphenol A-Epoxidharz) und einem Vinylester(VE)-harz.

8. Das Verfahren gemäß einem der Ansprüche 1-7, wobei das unbehandelte, nicht ausgehärtete wärmehärtende Harz eine Komponente umfasst, die ausgewählt wird aus einem Härtungsmittel (beispielsweise einem Anhydrid), einem Härtungskatalysator (beispielsweise einem Peroxid), einem Formtrennmittel (beispielsweise ausgewählt aus Wachs, Polyvinylalkohol und Silikon), einem inneren Trennmittel (beispielsweise Zn-Stearat) und einem Bindemittel (beispielsweise Silan).

9. Das Verfahren gemäß einem der Ansprüche 1-8, wobei dem Kohlenstofffaser-Prepreg-Abfallmaterial vor, während und/oder nach Schritt i) ein Modifikator zugesetzt wird, um die Zerkleinerung in Schritt i) und/oder die Trennung in Schritt ii) zu verbessern, wobei gegebenenfalls
a) der Modifikator in einer Menge von 1-7 Gew.-%, von 1-5 Gew.-% oder von etwa 4 Gew.-%, bezogen auf die Gesamtmenge an Kohlenstofffaser-Prepreg-Abfallmaterial zugesetzt wird und/oder
b) der Modifikator ausgewählt wird aus hydratisiertem Magnesiumsilikat, Calciumcarbonat und Aluminiumsilikaten.

10. Das Verfahren gemäß einem der Ansprüche 1-9, wobei das Kohlenstofffaser-Prepreg-Abfallmaterial umfasst
a) wärmehärtendes Harzmaterial, das ausgewählt wird aus Epoxidharz (beispielsweise Bisphenol A-Epoxidharz) und einem Vinylester(VE)-harz, und/oder
b) einer Polymerschutzfolie, die ausgewählt wird aus Polyethylenfolie, Polypropylenfolie, Polyamidfolie und Polyesterfolie.

11. Das Verfahren gemäß einem der Ansprüche 1-10, wobei im Trennschritt ii) der Luftstrom in entgegengesetzter Richtung 70 bis 120 m³/h, besonders 80-110 m³/h, insbesondere 90-105 m³/h, beträgt.

12. Das Verfahren gemäß einem der Ansprüche 1-11, wobei der Zerkleinerungsschritt i) in einer Zerkleinerungskammer durchgeführt wird, die ein Maschensieb mit einem Maschendurchmesser von 5-50 mm, bevorzugt von 10-45 mm, insbesondere 25-40 mm, aufweist.

13. Das Verfahren gemäß einem der Ansprüche 1-12, wobei nach dem Zerkleinerungsschritt i) das Gemisch aus in Harz eingebetteten Kohlenstofffaserteilchen (A) und Polymerfolienfragmenten (B) durch Absaugen zum Dichteseparator befördert wird.

## Revendications

1. Méthode de recyclage d'un préimprégné de fibres de carbone, la méthode comprenant les étapes de :
i) concassage d'un matériau de déchet de préimprégné de fibres de carbone comprenant un stratifié de fibres de carbone incorporé dans une résine thermodurcissable non durcie et un film polymère protecteur, pour fournir un matériau de déchet de préimprégné de fibres de carbone concassé comprenant un mélange de particules de fibres de carbone incrustées de résine (A), et
fragments de film polymère (B),
dans lequel les particules A ont une densité supérieure à celle des fragments B ;
ii) séparation des particules A d'avec les fragments B dans un séparateur par densité, et collecte des particules A dans un collecteur A et collecte des fragments B dans un collecteur B séparé, et dans laquelle les particules collectées A sont pratiquement exemptes de fragments B, ladite méthode étant **caractérisée en ce que** lesdites particules A sont séparées desdits fragments B, dans ledit séparateur par densité, par soumission d'un écoulement du mélange de particules A et de fragments B à un écoulement d'air de direction opposée ; et **en ce que** ladite méthode comprend en outre l'étape de
iii) addition aux particules A collectées de 5 à 35 % en poids de résine thermodurcissable non durcie vierge, le pourcentage en poids étant basé sur la quantité totale des particules A collectées et de la résine thermodurcissable non durcie vierge, pour fournir un matériau en fibres de carbone non durci recyclé comprenant les particules A collectées et la résine thermodurcissable non durcie vierge.

2. Méthode selon la revendication 1, dans laquelle l'addition de l'étape iii) est mise en oeuvre par
a) mélange des particules A collectées avec la résine thermodurcissable non durcie vierge, pour fournir le matériau en fibres de carbone non durci recyclé comprenant les particules A collectées et la résine thermodurcissable non durcie vierge.

3. Méthode selon la revendication 2, dans laquelle l'addition de l'étape iii) comprend en outre
b) la mise du matériau en fibres de carbone non durci recyclé fourni dans l'étape a) sous la forme d'une feuille à une température de 40 à 80 °C et sous une pression de 2 à 10 bar pour fournir le matériau en fibres de carbone non durci recyclé comprenant les particules A collectées et la résine thermodurcissable non durcie vierge sous la forme d'une feuille.

4. Méthode selon la revendication 1, dans laquelle l'addition de l'étape iii) est mise en oeuvre par
a) soumission des particules A collectées à une température de 40 à 80 °C et sous une pression de 2 à 10 bar pour obtenir une feuille de particules A collectées,
b) addition de la résine thermodurcissable non durcie vierge à la feuille de particules A collectées,
pour fournir le matériau en fibres de carbone non durci recyclé comprenant les particules A collectées et la résine thermodurcissable non durcie vierge sous la forme d'une feuille.

5. Méthode selon l'une quelconque des revendications 1 à 4, comprenant en outre
iv) le moulage du matériau en fibres de carbone non durci recyclé de la revendication 1 ou 2 ou du matériau en fibres de carbone non durci recyclé sous la forme d'une feuille de la revendication 3 ou 4 à une température de 125 à 200 °C et sous une pression de 20 à 180 bar.

6. Méthode selon l'une quelconque des revendications 1 à 5, dans laquelle le concassage de l'étape i) comprend
a) le découpage et/ou le déchiquetage du matériau de déchet de préimprégné de fibres de carbone et/ou
b) l'utilisation d'une lame réfrigérée et/ou d'une chambre de concassage réfrigérée.

7. Méthode selon l'une quelconque des revendications 1 à 6, dans laquelle la résine thermodurcissable non durcie vierge comprend un polymère thermodurcissable choisi parmi une résine époxy (par exemple une résine époxy de bisphénol A) et une résine d'ester vinylique (VE).

8. Méthode selon l'une quelconque des revendications 1 à 7, dans laquelle la résine thermodurcissable non durcie vierge comprend un composant choisi parmi un agent durcisseur (par exemple un anhydride), un catalyseur de durcissement (par exemple un peroxyde), un agent de démoulage (par exemple choisi parmi une cire, un poly(alcool vinylique) et une silicone), un agent antiadhésif interne (par exemple le stéarate de Zn), et un liant (par exemple un silane).

9. Méthode selon l'une quelconque des revendications 1 à 8, comprenant l'addition d'un modifiant au matériau de déchet de préimprégné de fibres de carbone avant, pendant et/ou après l'étape i) afin d'améliorer le concassage de l'étape i) et/ou la séparation de l'étape ii), dans laquelle éventuellement
a) le modifiant est ajouté en une quantité de 1 à 7 % en poids, de 1 à 5 % en poids ou d'environ 4 % en poids, par rapport à la quantité totale du matériau de déchet de préimprégné de fibres de carbone, et/ou
b) le modifiant est choisi parmi le silicate de magnésium hydraté, le carbonate de calcium et les aluminosilicates.

10. Méthode selon l'une quelconque des revendications 1 à 9, dans laquelle le matériau de déchet de préimprégné de fibres de carbone comprend
a) un matériau en résine thermodurcissable choisi parmi une résine époxy (par exemple une résine époxy de bisphénol A) et une résine d'ester vinylique (VE), et/ou
b) un film polymère protecteur choisi parmi un film de polyéthylène, un film de polypropylène, un film de polyamide et un film de polyester.

11. Méthode selon l'une quelconque des revendications 1 à 10, dans laquelle, dans l'étape de séparation ii), l'écoulement d'air de direction opposée est de 70 à 120 m³/h, en particulier de 80 à 110 m³/h, plus particulièrement de 90 à 105 m³/h.

12. Méthode selon l'une quelconque des revendications 1 à 11, dans laquelle l'étape de concassage i) est mise en oeuvre dans une chambre de concassage dotée d'un tamis à mailles ayant un diamètre d'ouverture de maille de 5 à 50 mm, en particulier de 10 à 45 mm, plus particulièrement de 25 à 40 mm.

13. Méthode selon l'une quelconque des revendications 1 à 12, dans laquelle, après l'étape de concassage i), le mélange de particules de fibres de carbone incrustées de résine (A) et de fragments de film polymère (B) est transporté par aspiration jusqu'au séparateur par densité.
